# EUROPEAN PATENT SPECIFICATION

(11) **EP 3 448 175 B1**
(45) Date of publication and mention of the grant of the patent: **30.10.2019**
(21) Application number: 17717750.8
(22) Date of filing: 20.04.2017
(51) Int. Cl.: A23L 27/00, A23L 23/10

(54) **SAVOURY COMPOSITE FOOD PRODUCT COMPRISING GEL PIECES**
SCHMACKHAFTES ZUSAMMENGESETZTES LEBENSMITTELPRODUKT MIT GELTEILEN
PRODUIT ALIMENTAIRE COMPOSITE SAVOUREUX COMPRENANT DES PIÈCES DE GEL

(30) Priority: 26.04.2016 WO PCT/EP2016/167158
(43) Date of publication of application: 06.03.2019
(73) Proprietor: Unilever N.V., 3013 AL Rotterdam (NL); Unilever PLC, London, Greater London EC4Y 0DY (GB)
(72) Inventor: SAILER, Winfried, 74074 Heilbronn (DE); SCHÄNZEL, Monika, Renate, 74074 Heilbronn (DE); LEMMERS, Marc, 3133 AT Vlaardingen (NL)
(74) Representative: Tjon, Hon Kong Guno
(86) International application number: PCT/EP2017/059366
(87) International publication number: WO 2017/186560

(56) References cited:
- EP-A1- 0 479 126
- WO-A1-2012/097934
- DE-U1-202008 002 629
- US-A- 4 844 922
- US-A- 5 456 937
- US-A1- 2003 044 503

## Description

### TECHNICAL FIELD OF THE INVENTION

The present invention relates to a savoury composite food product comprising gel pieces having a mesh size in the range of 0.2-10 mm; tissue-based food particles having a mesh size in the range of 0.2-10 mm; and lipophilic material, wherein the gel pieces and the tissue-based food particles are covered by the lipophilic material.

The composite food product of the present invention can be consumed as such or it can be used as a seasoning, an add-in or a concentrate.

### BACKGROUND OF THE INVENTION

Composite savoury food products containing gels are known in the art. US 4,844,922, for instance, describes a low-fat minced meat food wherein a non-oleaginous hot-melt gel is dispersed in a low-fat minced meat and wherein the amount of said hot-melt gel at temperatures below the melting point thereof, to the minced meat, is in the range from about 1 to about 25% by weight and the hot-melt gel has an average particle size of about 0.1 to about 3 times the particle size of the particles of minced meat.

EP-A 0 479 126 describes a low-calory foodstuff, comprising gel-particles produced from a thermally irreversible coagulum including glucomannan as a main component by chopping the coagulum. The Examples of the patent application describe the application of gel-particles of glucomannan coagulum in soup. Example 2 describes the addition of corn oil and emulsifier to gel-particles of neutral glucomannan coagulum, followed by stirring at high speed.

US 5,456,937 describes a method of flavoring a beverage or food which comprises forming a gelled, spherical flavor bead comprising gellan gum and one or more flavorings, and adding the bead to the beverage or food. The examples of the US patent describe vinegar beads that can be incorporated into salad dressing or sauces.

Gel-based savoury concentrates are described in WO 2012/097940. This international patent application describes a packaged savoury food concentrate in the form of a gel comprising, based on the weight of the total food concentrate without the packaging:
- from 2 wt% to 15 wt% of NaCl,
- water,
- an effective amount of gelling agent,
- from 5 wt% to 60 wt% of a liquid polyol,
- non-gelatinised starch.

JP 2015181360 describes the preparation of salt containing gel pieces and the application of these gel pieces in tomato sauce in a concentration of 21 wt.% or 31 wt.%.

### SUMMARY OF THE INVENTION

The inventors have developed a savoury composite food product that may be consumed as such or that can be used to improve the taste and/or appearance of various foodstuffs as a seasoning or a concentrate. The composite food product offers the advantage that it can be provided in various attractive forms and textures. Furthermore, the product is shelf-stable and easy to dose.

The savoury composite food product comprises at least 35 wt.% of gel pieces having a mesh size in the range of 0.2-10 mm; 0.2-55 wt.% of tissue-based food particles having a mesh size in the range of 0.2-10 mm; and at least 2 wt.% of lipophilic material covering said gel pieces and said tissue-based food particles; said savoury composite food product having the following composition:
- 20-75 wt.% water;
- 2-30 wt.% of oil;
- 0.1-40 wt.% of taste contributing components selected from glutamic acid, 5'-ribonucleotides, sucrose, glucose, fructose, lactose, lactic acid, citric acid, acetic acid and combinations thereof;
- 0.5-20% by weight of water of gelling agent;
- 35-1100 mmol per 100 g of food product of alkalimetal cation selected from Na⁺, K⁺ and combinations thereof.

The savoury composite food product of the present invention can have an easily spoonable consistency due to the fact that the particles (gel pieces and tissue-based food particles) in the product stick together. Furthermore, the composite product can be provided in a form that can be squeezed out of a pouch or a tube without oil separation or syneresis.

The savoury composite food product of the present invention is surprisingly stable. The composite food product exhibits little or no syneresis or oil separation during storage and oxidative damage is effectively minimized, especially if the product has a high compactness.

Due to the taste contributing components in the gel pieces, the spoonability and the attractive appearance of the composite food product, it can suitably be applied as a seasoning onto dishes or as an add-in. Alternatively, the composite food product may be employed as a concentrate that releases the taste contributing components from the gel pieces, e.g. when it is added to hot water in the preparation of a bouillon, a soup, a sauce, a gravy, a dressing or a glaze, but also to create flavour specks in final application.

### DETAILED DESCRIPTION OF THE INVENTION

Accordingly, a first aspect of the invention relates to a composite food product comprising at least 35 wt.% of gel pieces having a mesh size in the range of 0.2-10 mm; 0.2-55 wt.% of tissue-based food particles having a mesh size in the range of 0.2-10 mm; at least 2 wt.% of lipophilic material covering said gel pieces and said tissue-based food particles; said savoury composite food product having the following composition:
- 20-75 wt.% water;
- 2-30 wt.% oil;
- 0.1-40 wt.% of taste contributing components selected from glutamic acid, 5'-ribonucleotides, sucrose, glucose, fructose, lactose, lactic acid, citric acid, acetic acid and combinations thereof;
- 0.5-20% by weight of water of gelling agent;
- 35-1100 mmol per 100 g of food product of alkalimetal cation selected from Na⁺, K⁺ and combinations thereof.

The term "gel pieces" as used herein refers to cohesive particles containing water, gelling agent and optionally further ingredients, such as taste contributing components. Typically, the gel pieces contain a gel network that holds together the water and other ingredients.

The term "tissue-based food particles" as used herein refers to discrete particles that contain at least 50% by weight of dry matter of tissue material from plants or animals.

The term "lipophilic material" as used herein refers to a material that is present in the food product as a continuous phase that largely (>50 wt.%) consists of oil.

The term "oil" as used herein refers to glycerides selected from triglycerides, diglycerides, monoglycerides, phosphoglycerides and combinations thereof. The oil can be liquid, solid or semi-solid at ambient temperature (20°C).

The term "glutamic acid" as used herein encompasses both the protonated acid and salts thereof. The same applies to each of lactic acid, citric acid and acetic acid,

The term "mesh size" as used herein refers to a particle size that has been determined with the help of a mesh material. In order to determine the percentage of particles having a mesh size within the range of a minimum of X mm and a maximum of Y mm, the particles are first sieved on a first mesh material having a mesh of Y mm.

Subsequently, the material that has passed the first mesh material is sieved on a second mesh material having a mesh of X mm. The percentage of the total amount of particles that passes mesh material Y but not mesh material X equals the percentage of particles having a mesh size in the range of X to Y mm. In order to get an adequate measurement of the particle size it is necessary to ensure that the particles do not stick together. This may be achieved by sieving in a suitable liquid medium, such as water or salt solution, using a sieving time of, for instance, 15 seconds.

The savoury composite food product of the present invention preferably contains at least 40 wt.%, most preferably 45-95 wt.% of gel pieces having a mesh size in the range of 0.2-10 mm.

The gel pieces in the composite food product of the present invention are covered by lipophilic material. This means that most of the surface of these gel pieces is in direct contact with the lipophilic material. The lipophilic layer may be present as a coating layer or it may form the interface between gel pieces or gel pieces and other particulate constituents of the composite food product.

In accordance with a particularly preferred embodiment of the invention, the gel pieces dissolve within 10 minutes, more preferably within 5 minutes, even more preferably within 3 minutes after having been added in a concentration of 5% (w/w) to hot water having a temperature of 95°C and applying gentle stirring. Even more preferably, the gel pieces dissolve within 10 minutes, more preferably within 5 minutes, even more preferably within 3 minutes when added in a concentration of 5% (w/w) to hot water having a temperature of 80°C and applying gentle stirring. By employing gel pieces that dissolve in hot water, it is ensured that the taste contributing components that is present in the gel pieces is rapidly released and homogeneously distributed throughout the hot water.

The composite food product of the present invention typically contains 25-70 wt.%, more preferably 30-68 wt.% and most preferably 35-65 wt.% water. This water content includes all the water contained in the composite food product including, for instance, water that is contained in the gel pieces and in tissue-based food particles.

The oil content of composite food product typically is in the range of 3-25 wt.%, more preferably in the range of 4-22 wt.% and most preferably in the range of 4.5-20 wt.%.

The oil in the composite food product typically has a solid fat content at 20°C of less than 20%, more preferably of less than 10%. The solid fat content of fat at 20°C (N₂₀) or at other temperatures can suitably be determined using the method described in Animal and vegetable fats and oils -- Determination of solid fat content by pulsed NMR -- Part 1: Direct method - ISO 8292-1:2008.

The oil that is present in the composite food product preferably contains at least 50 wt.%, more preferably at least 70 wt.% and most preferably at least 90 wt.% glycerides selected from triglycerides, diglycerides and combinations thereof.

According to a particularly preferred embodiment, the oil contained in the composite food product is liquid at 20°C. The oil in the composite food product can comprise oil components selected from vegetable oil, animal fats (e.g. chicken fat), and marine oils (e.g. fish oil). Preferably, the oil contains at least 80 wt.%, more preferably at least 90 wt.% of an oil component selected from vegetable oil, poultry fat and fish oil. Examples of vegetable oils that can be used include sunflower oil, soybean oil, rapeseed oil, cottonseed oil, maize oil, olive oil, palm oil, palm kernel oil, coconut oil, fractions of these oils and combinations thereof. Other examples of vegetable oils that can be used include hydrogenated vegetable oils, interesterified vegetable oils and combinations of these vegetable oils and/or the aforementioned vegetable oils.

The taste contributing components typically are present in the composite food product in a concentration of 0.3-30 wt.%, more preferably of 0.5-20 wt.% and most preferably of 1-10 wt.%.

In accordance with one preferred embodiment, the composite food product contains 50-500 mmol, more preferably 70-450 mmol and most preferably 100-400 mmol alkalimetal cation selected from Na⁺, K⁺ and combinations thereof per 100 g of food product.

The composite food product preferably contains alkalimetal cation in a concentration of 50-900 mmol per 100 g of water. More preferably the product contains alkalimetal cation in a concentration of 250-750 mmol per 100 g of water, most preferably of 400-550 mmol per 100 g of water.

According to another preferred embodiment, the composite food product contains at least 0.1 wt.%, preferably at least 0.3 wt.% of taste enhancing components selected from glutamate, 5'-ribonucleotides and combinations thereof. The presence of the latter taste contributing components makes the composite food product particularly suitable for use as a taste enhancer in savoury products. Glutamate and/or 5'-ribonucleotides can be introduced in the present composite food product as such or in the form of e.g. yeast extract or protein hydrolysates.

The gelling agent is preferably contained in the composite food product in a concentration of 0.8-10% by weight of water, more preferably of 1-6% by weight of water and most preferably of 1.2-5% by weight of water.

The composite food product of the present invention typically contains at least 35 wt.% of gel pieces having a mesh size in the range of 0.15-7 mm and most preferably in the range of 0.2-5 mm.

The composite food product of the present invention typically contains at least 40 wt.% of gel pieces having a mesh size in the range of 0.15-7 mm and most preferably in the range of 0.2-5 mm.

The gelling agent that is present in the composite food product is preferably selected from the group of agar, carrageenans, pectins, xanthan gum, galactomanans, glucomanans, gelatins, legume starch (e.g. pea starch) and combinations thereof. More preferably, the gelling agent is selected from agar, locust bean gum, xanthan gum, pectin, gelatin, carrageenan and combinations thereof. Most preferably, the gelling agent is agar.

The carrageenan employed as a gelling agent is preferably selected from kappa-carrageenan, iota-carrageenan and combinations thereof.

The gelatin employed preferably has a Bloom strength of more than 200. The gelatin employed preferably originates from pig.

In accordance with an advantageous embodiment, the gelling agent comprises a combination of locust bean gum and xanthan gum in a combined concentration of 1-5%, more preferably of 2-4% by weight of water. Preferably locust bean gum and xanthan gum are used in a weight ratio of 1:9 to 9:1, more preferably in a weight ratio of 3:7 to 7:3.

According to a particularly preferred embodiment, the composite food product contains, calculated by weight of water, 1-8%, more preferably 1.5-6%, most preferably 2-5% of agar.

The gel pieces in the composite food product of the present invention preferably are not capsules with a liquid interior. Even more preferably, the gel pieces are homogeneous in composition.

In one advantageous embodiment of the composite food product, the gel pieces of the composite food product are preferably regularly shaped. Regularly shaped gel pieces offer the advantage that the gel pieces can easily move around each other, thereby contributing to the fluidity of the composite food product. Accordingly, it is preferred that at least 80 wt.% of the gel pieces have an aspect ratio of less than 3:1, more preferably an aspect ratio of less than 2:1. Here the aspect ratio equals the ratio of the largest and smallest diameter of a gel piece. According to a particularly preferred embodiment the gel pieces are spherical.

In another equally advantageous embodiment of the composite food product, the gel pieces of the composite food product are irregularly shaped. Irregularly shaped gel pieces may be prepared by first preparing a gel and subsequently breaking up the gel under conditions of shear. The irregularly shaped gel pieces offer the advantage that they have a 'natural' look that combines nicely with natural ingredients such as pieces of plant material.

Typically, the composite food product contains 0.5-50 wt.%, more preferably 0.8-45 wt.% and most preferably 1-40 wt.% of pieces of tissue-based food particles having a mesh size in the range of 0.2-10 mm.

The composite food product of the present invention preferably contains 0.2-50 wt.%, more preferably 0.5-45 wt.% and most preferably 0.8-40 wt.% of pieces of plant material having a mesh size in the range of 0.2-10 mm.

The tissue-based food particles in the composite food product preferably contain at least 70% by weight of dry matter, more preferably at least 80% by weight of dry matter of tissue material from plants or animals.

According to a particularly preferred embodiment, the tissue-based food particles contain at least 70% by weight of dry matter, more preferably at least 80% by weight of dry matter of tissue material from plants.

Examples of tissue material from plant or animals include vegetables, herbs, spices, fruit, nuts, grains, meat and combinations thereof. Preferably the tissue material is edible material selected from vegetables, herbs, spices and fruit.

In accordance with a particularly preferred embodiment, the composite food product contains at least 1 wt.%, more preferably at least 3 wt.% and most preferably at least 5 wt.% of pieces of plant material having a mesh size in the range of 0.2-10 mm, said plant material being selected from vegetables, herbs, spices, fruit and combinations thereof.

The composite food product of the present invention preferably contains 3-35 wt.%, more preferably 4-30 wt.% and most preferably 4.5-28 wt.% of the lipophilic material.

The lipophilic material in the composite food product typically contains at least 50 wt.% oil, more preferably at least 70 wt.% oil and most preferably at least 90 wt.% oil.

The lipophilic material preferably contains at least 50 wt.%, more preferably at least 70 wt.% and most preferably at least 90 wt.% glycerides selected from triglycerides, diglycerides and combinations thereof.

According to a particularly preferred embodiment, the lipophilic material is liquid at 20°C.

The lipophilic material may suitably contain non-lipophilic components such as water. However, in case the lipophilic material contains water, it is highly advantageous to employ a lipophilic material that is oil-continuous.

The combination of the gel pieces, the lipophilic material and the tissue-based food particles preferably constitutes at least 70 wt.%, more preferably at least 80 wt.% and most preferably at least 90 wt.% of the composite food product.

The composite food product typically has a water activity of 0.5-0.9, more preferably from 0.55-0.85, most preferably between 0.60 and 0.80.

The gel pieces of the composite food product typically contain 25-80 wt.%, more preferably 30-75 wt.% and most preferably 40-70 wt.% water.

According to another preferred embodiment, the gel pieces contain at least 1 wt.%, more preferably 1.2-20 wt.% and most preferably 1.5-12 wt.% of gelling agent. The gelling agent in the gel pieces is preferably selected from the group of agar, carragenans, pectins, xanthan gum, galactomanans, glucomanans, gelatins and combinations thereof.

According to a particularly preferred embodiment the gel pieces contain 1-9 wt.%, more preferably 1.2-7 wt.% of agar.

The taste contributing components typically are present in the gel pieces in a concentration of 0.5-50 wt.%, more preferably of 1-30 wt.% and most preferably of 2-20 wt.%.

According to a preferred embodiment, the gel pieces contain at least 0.1 wt.%, preferably at least 0.3 wt.% of taste enhancing components selected from glutamate, 5'-ribonucleotides and combinations thereof. The presence of the latter taste contributing components makes the composite food product particularly suitable for use a taste enhancer in savoury products.

A particularly preferred embodiment of the present invention relates to a savoury composite food product that contains:
- 40-75 wt.% water;
- 4-25 wt.% oil;
- 0.5-20 wt.% of the taste contributing components;
- 70-1100 mmol alkalimetal cation selected from Na⁺, K⁺ and combinations thereof per 100 g of food product.

Another aspect of the present invention relates to a process of preparing a composite food product as described herein before, said process comprising mixing gel pieces with tissue-based food particles, and lipophilic material.

In a particularly preferred embodiment of the present process, gel pieces having a high water content are mixed with dry tissue-based food particles, following which the dry tissue-based food particles become hydrated as a result of water migration from the gel pieces to the tissue-based food particles. In accordance with this embodiment, the gel pieces employed in the process preferably have a water content of 50-90 wt.%, more preferably of 55-85 wt.%. The tissue-based food particles employed preferably have a water content of less than 20 wt.%, more preferably of less than 18 wt.%, most preferably of less than 15 wt.%.

The inventors have found that addition of tissue-based food particles having a low water content contributes to the shelf-stability of the composite food product. More particularly, it was observed that the addition of dry tissue-based food particles effectively reduces syneresis.

The gel pieces employed in the present process may be produced in different ways. In accordance with one embodiment, first a body of aqueous gel is prepared and subsequently, this body of gel is divided into gel pieces, e.g. by cutting the body of gel in a dicing device.

In accordance with another embodiment, gel pieces are formed by introducing small quantities (e.g. drops) of a gel-forming liquid into a liquid medium that induces these small quantities to form gel pieces. Gelation of small quantities of gel-forming liquid may be induced, for instance, by temperature reduction.

The invention is further illustrated by the following non-limiting examples.

### EXAMPLES

### Example 1

Savoury composite food products containing pearl-shaped gel pieces were prepared as described below.

An aqueous gelling composition was prepared on the basis of the recipe that is shown in Table 1.

**Table 1**

| | **Wt.%** |
|---|---|
| Tap water | 67.34 |
| Salt | 22,54 |
| Sugar | 3.05 |
| Yeast Extract Powder (<1 % salt) | 1.83 |
| Turmeric, ground | 0.03 |
| Chicken extract powder | 1.65 |
| Mono-sodium glutamate | 2.00 |
| Inosinate/Guanylate | 0.20 |
| Agar | 1.35 |
| White pepper, ground | 0.01 |

The aqueous gelling composition was prepared by introducing the water into a vessel. Next, the remaining components were added while stirring and the mixture was heated to 100°C and kept at this temperature for approximately 2 minutes, whilst avoiding boiling, followed by cooling to approximately 65°C whilst covering off the mixture.

Sunflower oil was introduced in vessel and kept at a temperature of 5°C. The cooled aqueous gelling composition having a temperature of approximately 65°C was added to the cold oil in drop-wise fashion. The drops of gelling compositions formed pearl-shaped gel pieces in the cold oil. After the aqueous gelling composition had been added to the cold oil, the oil containing the gel pieces was put onto a sieve (mesh size = 0.2 mm) to remove loose oil, following which the sieve carrying the gel pieces was put on oil soaking tissue to remove as much oil as possible. Next, the gel particles were first sieved through a 5mm sieve and then over a 0.5 mm sieve to obtain a fraction with particle size 0.5-5 mm (oil content approx.. 1-2 wt.%).

Next, these pearl-shaped gel pieces were used to prepare savoury composite food products of different compositions. The recipes of these savoury composite food products are shown in Table 2.

**Table 2**

| | **Wt.%** | | |
|---|---|---|---|
| | **1** | **2** | **A** |
| Gel pieces | 85.0 | 95.0 | 98.0 |
| Dry vegetable particles ¹ | 0.2 | 0.2 | 0.2 |
| Sunflower oil | 14.8² | 4.8² | 1.8² |

| | | | |
|---|---|---|---|
| ¹ air dried parsley, diameter 2-4 mm ² Includes oil adhered to the gel pieces after their preparation | | | |

These composite food products were prepared by mixing the gel pieces at minimum speed (scale 0.5) with the other components in a Kenwood mixer (Cooking Chef, 6,71 bowl), equipped with stainless steel K-beater until homogenous.

These composite food products were evaluated a few days later by an expert panel. During this period water migrated from the gel pieces into the dry vegetable particles (water content increased to approximately 1.3 wt.%).

The panel found that products 1 and 2 could easily be spooned out of a container as the particles on the spoon stuck to each other. Product 1 was more compact than product 2. Products 1 and 2 had a shiny and glossy, i.e. wet appearance. In contrast to products 1 and 2, product A could not easily be spooned as there was little cohesion between the particles. Furthermore, product A was much less compact and less glossy than products 1 and 2.

### Example 2

A savoury composite food product containing regularly cut gel pieces and oil was prepared starting from an aqueous gelling composition having the composition shown in Table 1 of Example 1.

The aqueous gelling composition was prepared in pilot plant equipment (Fryma Koruma MaxxD Lab with standard toothed rotor-stator of 4 mm) in a batch of 15 kg. The rotor-stator system was used with maximum shear of 2000 rpm together with the scraper constantly at 32 rpm. The dry ingredients were sucked-in via a homogeniser (by applying a vacuum) and admixed to the water in the vessel to form a homogenous mixture. The mixture was heated to 100°C and kept at this temperature for 1 min.

The hot aqueous gelling composition was transferred into a rectangular container (appr. 1.3 kg), covered with plastic foil and kept overnight in a refrigerator (5°C). The cooled gel was cut roughly in 4 pieces. These cubes were transferred into a dicing device. The cut gel so obtained was composed of regular gel pieces with a diameter of approximately 3 mm.

Next, these regularly cut gel pieces were used to prepare a savoury composite food product on the basis of the recipe shown in Table 3.

**Table 3**

| | **Wt.%** |
|---|---|
| | **1** |
| Gel pieces | 85.0 |
| Dry vegetable particles ¹ | 0.2 |
| Sunflower oil | 14.8 |

| | |
|---|---|
| ¹ air dried parsley, diameter 2-4 mm | |

The composite food product was prepared by mixing the gel pieces with the other components at minimum speed (0.5 on scale) in a Kenwood mixer (Cooking Chef, 6,71 bowl), equipped with stainless steel K-beater until homogenous.

The composite food product was evaluated a few days later by an expert panel. During this period water migrated from the gel pieces into the dry vegetable particles (water content increased to approximately 1.3 wt.%). The panel was found that the product had a natural appearance. The particles stuck together so that the product could easily be spooned out of a container. The product showed some compactness and had a glossy appearance, suggesting wetness and freshness.

### Example 3

Savoury composite food products containing irregularly gel pieces were prepared starting from an aqueous gelling composition having the composition shown in Table 1 of Example 1.

The hot aqueous gelling composition was transferred into a rectangular container (30x50x5cm filled with approx. 6kg), covered with plastic foil and kept overnight in a refrigerator at 5°C. The cooled gel was cut into 7x7x7cm pieces. About 1,3 kg of these cubes were transferred into a Lab ADE table cutter (approx. 11I size; equipped with 3 sickle knifes) and were cut for about 18 seconds at speed 1 (20 rpm). The gel pieces were removed from the cutter and sieved through a 8 mm sieve to remove very coarse material and then over a 5 mm and 0.5 mm sieve to obtain a fraction with particle sizes between 0.5-5mm. The cut gel so obtained was composed of irregularly shaped gel pieces.

Next, these irregularly shaped gel pieces were used to prepare savoury composite food products on the basis of the recipes shown in Table 4.

**Table 4**

| | **Wt.%** | | | |
|---|---|---|---|---|
| | **1** | **2** | **3** | **A** |
| Gel pieces | 85.0 | 75.0 | 75.0 | 99.8 |
| Dry vegetable particles ¹ | 0.2 | 0.2 | 0.2 | 0.2 |
| Sunfower oil | 14.8 | 24.8 | 0.0 | 0.0 |
| Chicken fat | 0.0 | 0.0 | 24.8 | 0.0 |

| | | | | |
|---|---|---|---|---|
| ¹ Air dried parsley, diameter 2-4 mm | | | | |

These composite food products were prepared by mixing the gel pieces at minimum speed (0.5 on scale) with the other components (at room temperature) in a Hobart mixer equipped with stainless steel K-beater until homogenous.

These composite food products were evaluated a few days later by an expert panel. During this period water migrated from the gel pieces into the dry vegetable particles (water content increased to approximately 1.3 wt.%). The panel found that products 1 and 2 could easily be spooned out of a container as the particles stuck together on the spoon . Product 2 was more compact than product 1. Both products 1 and 2 had a shiny and glossy appearance that made these products look wet.

Product 3 was comparable to product 2 in terms of spoonability and compactness, but it was more yellowish in colour.

In contrast to products 1-3, product A could not easily be spooned out of a container. Furthermore, product A showed nearly no compactness, cohesion or glossiness.

### Example 4

Savoury composite food products containing irregularly shaped gel pieces were prepared as described below.

An aqueous gelling composition was prepared on the basis of the recipe that is shown in Table 5.

**Table 5**

| | **Wt.%** |
|---|---|
| Tap water | 67.34 |
| Salt | 22,54 |
| Sugar | 2.20 |
| Yeast Extract Powder (<1% salt) | 1.83 |
| Turmeric, ground | 0.03 |
| Chicken extract powder | 1.65 |
| Mono-sodium glutamate | 2.00 |
| Inosinate/Guanylate | 0.20 |
| Agar | 2.20 |
| White pepper, ground | 0.01 |

A cut gel composed of irregularly shaped gel pieces was prepared from this aqueous gelling composition in the same as described in Example 3. The cut gel so obtained was composed of irregularly shaped gel pieces. More than 98 wt.% of these irregularly shaped gel pieces had a diameter in the range of 0.5-5 mm.

Next, these irregularly shaped gel pieces were used to prepare a savoury composite food products on the basis of the recipes shown in Table 6.

**Table 6**

| | **Wt.%** | | |
|---|---|---|---|
| | **1** | **2** | **A** |
| Gel pieces | 71.0 | 81.0 | 96.0 |
| Dry vegetable particles ¹ | 4.0 | 4.0 | 4.0 |
| Sunflower oil | 25.0 | 15.0 | 0.0 |

| | | | |
|---|---|---|---|
| ¹ Air-dried carrot granules, diameter 1-2 mm | | | |

These composite food products were prepared by mixing the gel pieces at minimum speed (0.5 on scale) with the other components in a Kenwood mixer (Cooking Chef, 6,71 bowl) equipped with stainless steel K-beater until homogenous.

These composite food products were evaluated a few days later by an expert panel. During this period a significant amount of the water contained in the gel pieces migrated into the dry vegetable particles. The water content of these vegetable particles increased to approximately 25 wt.% and as a result these vegetable particles regained a fresh appearance. The panel found that products 1 and 2 could easily be spooned out of a container because the particles stuck together and showed a strong compactness. Products 1 and 2 had a shiny and glossy appearance that is typical of wet products.

In contrast to products 1 and 2, product A could not easily be spooned out of a container, showed nearly no compactness, cohesion or glossiness.

### Example 5

Savoury composite food products containing irregularly gel pieces were prepared using gel pieces that had been prepared using the procedure described in Example 3.

Next, these irregularly shaped gel pieces were used to prepare a savoury composite food products on the basis of the recipes shown in Table 7.

**Table 7**

| | **Wt.%** | |
|---|---|---|
| | **1** | **2** |
| Gel pieces | 85.0 | 85.0 |
| Dry vegetable particles ¹ | 4.0 | |
| Wet vegetable particles ² | | 4.0 |
| Sunflower oil | 11.0 | 11.0 |

| | | |
|---|---|---|
| ¹ Freeze dried onion cubes (diameter 3 mm) ² Frozen leek (6-8 mm) | | |

Composite food products 1A and 2A were prepared by introducing the gel pieces into a Lab Kenwood mixer (Cooking Chef, 6,71 bowl) equipped with stainless steel K-beater. The oil component was added and the components were mixed at minimum speed (0.5 on scale) for approx. 1 minute. Next, the machine was stopped, the vegetable pieces were added and the mix was further stirred until homogenous.

Composite food products 1B and 2B were prepared by introducing the gel pieces into a Lab Kenwood mixer (Cooking Chef, 6,71 bowl) equipped with stainless steel K-beater. The vegetable pieces were added and the components were mixed at minimum speed (0.5 on scale) for approx. 1 min. Next, the machine was stopped, the oil component was added and the mix was further stirred at minimum speed until homogenous.

All four composite food products had a water activity at 20°C of about 0.76.

These composite food products were evaluated a few days later by an expert panel after a few days storage. During this period a significant amount of the water contained in the gel pieces migrated into the dry vegetable particles. The panel found that all products could easily be spooned out of a container because the particles stuck together and because the products were quite compact. The products had a wet appearance and did not suffer from syneresis.

### Example 6

A savoury composite food product was prepared on the basis of the recipe shown in Table 8. The pearl-shaped gel pieces were prepared as in Example 1.

**Table 8**

| | **Wt.%** |
|---|---|
| Gel pieces | 89.09 |
| Oil | 1.82 |
| Air dried carrot granules (1-2 mm) | 5.54 |
| Air dried red bell pepper granules (1-3 mm) | 1.85 |
| Air dried leek flakes (2-6 mm) | 0.96 |
| Air dried parsley (2-4 mm) | 0.74 |

The composite food product was prepared by introducing the gel pieces into a Kenwood mixer (Cooking Chef, 6,7I bowl) equipped with stainless steel K-beater. The other components were added and mixed at minimum speed until homogenous.

The composite food product was evaluated a few days later by an expert panel. During this period a significant amount of the water contained in the gel pieces migrated into the dry vegetable particles. The water content of these vegetable particles increased to approximately 56 wt.% and as a result these vegetable particles regained a fresh appearance. The panel found that the product was very colourful and natural in appearance with a high amount of vegetables. The product looked slightly glossy and showed no phase separation at all. There was some adhesion between the particles.

### Example 7

A composite savoury food product containing gel pieces, vegetable pieces and oil was prepared as described below.

An aqueous gelling composition was prepared on the basis of the recipe that is shown in Table 9.

**Table 9**

| | **Wt.%** |
|---|---|
| Salt | 21.0 |
| Agar | 1.45 |
| Caramel colour | 1.2 |
| Soy sauce | 15.75 |
| Water | 60.6 |

Water and soy sauce were added to a vessel. The remaining ingredients were added as a powder mix while stirring and heated up to 100°C under continuous stirring and kept at this temperature for about 2 minutes, whilst avoiding boiling.

The hot aqueous gelling composition (1.3 kg) was transferred into a rectangular container, covered with plastic foil and kept overnight in a refrigerator at 5°C. The gel mass was removed from the container and cut into cubes of approximately 5x5x5 cm. These cubes were transferred into a Lab ADE table cutter (approx. 11I size; equipped with 3 sickle knifes) and were cut in about 60 seconds at speed 1 (20rpm). The gel pieces were removed from the cutter and sieved through a 5 mm sieve to get a particle fraction < 5mm. The cut gel so obtained was composed of irregularly shaped gel pieces. having a diameter of 0,2-5 mm.

Next, a savoury composite food product containing gel pieces, oil and garnish was prepared on the basis of the recipe shown in Table 10.

**Table 10**

| | **Wt.%** |
|---|---|
| Gel pieces | 83.8 |
| Sunflower oil | 11.2 |
| Air dried red bell pepper granules (1-3 mm) | 2.0 |
| Air dried lovage, broken leaves (1-5 mm) | 1.8 |
| Air dried leek flakes (2-6 mm)¹ | 1.2 |

The composite food product was prepared by introducing the gel pieces into a Kenwood mixer (Cooking Chef, 6,71 bowl) equipped with stainless steel K-beater. The other components were added and mixed at minimum speed until homogenous. The composite food product was evaluated a few day later by an expert panel. During this period a significant amount of the water contained in the gel pieces migrated into the dry vegetable particles. The water content of these vegetable particles increased to approximately 31 wt.% and as a result these vegetable particles regained a fresh appearance. The panel found that the product showed very good spoonability, that is was easy to dose and that the particles stuck together. The product did not show any phase separation.

### Example 8

A composite savoury food product containing gel pieces, vegetable pieces and oil was prepared as described below.

An aqueous gelling composition was prepared on the basis of the recipe that is shown in Table 11.

**Table 11**

| | **Wt.%** |
|---|---|
| Tap water | 67.34 |
| Salt | 22.54 |
| Sugar | 2.60 |
| Mono-sodium glutamate | 2,00 |
| Locust bean gum | 0.90 |
| Xanthan gum | 0.90 |
| Yeast Extract Powder (<1%salt) | 1.83 |
| Chicken extract powder | 1.65 |
| Inosinate/Guanylate IG | 0.20 |
| Turmeric powder | 0.03 |
| Pepper white ground | 0.01 |

A batch of 1500 g was produced in Thermomix TM31 equipment. The powder ingredients were homogenously mixed into the water at 40°C while stirring at maximum speed 5. Next, the mixture was heated to 85°C and held at 85°C for 3 minutes, followed by filling into a rectangular container (∼1,3 kg) that was subsequently covered with plastic foil and kept overnight at 5°C.

The cooled gel was cut into approx. 5x5x5cm pieces. About 1,3kg of these cubes were transferred into a Lab ADE table cutter (approx. 11I size; equipped with 3 sickle knifes) and were cut in about 12 seconds at speed 1 (20 rpm). The gel pieces were removed from the cutter. The gel pieces were sieved through a 5mm sieve and a 0.5 mm sieve to obtain a fraction with particle sizes of 0.5-5mm. The cut gel so obtained was composed of irregularly shaped gel pieces.

Next, a savoury composite food product containing gel pieces, oil and garnish was prepared on the basis of the recipe shown in Table 12.

**Table 12**

| | **Wt.%** |
|---|---|
| Gel pieces | 91 |
| Sunflower oil | 5 |
| Air dried carrot granules (1-2 mm) | 2 |
| Freeze dried onion cubes (3 mm) | 2 |

The composite food product was prepared by introducing the gel pieces into a Kenwood mixer (Cooking Chef, 6,71 bowl) equipped with stainless steel K-beater. The other components were added and mixed at minimum speed until homogenous.

After a few days, the product was analyzed to determine the respective concentrations of gel pieces, vegetable particles and lipophilic material within the composite product. The results are shown in Table 13.

**Table 13**

| | **Wt.%** |
|---|---|
| Gel pieces | 70 |
| Lipophilic material | 5 |
| Pieces of vegetable material | 25 |

These results demonstrate that the dry vegetable particles are effectively rehydrated as a result of water migration from gel pieces to the vegetable particles.

The composite food product was evaluated by an expert panel. It was found that the product showed very good spoonability and compactness. The particles in the product stuck together even if the product was stirred. The product had a coarse puree-like texture. The product had a moist and slightly shiny appearance, giving an appealing fresh impression.

### Example 9

A composite savoury food product containing gel pieces, vegetable pieces and oil was prepared as described below.

An aqueous gelling composition was prepared on the basis of the recipe that is shown in Table 14.

**Table 14**

| | **Wt.%** |
|---|---|
| Tap water | 67.34 |
| Salt | 22.54 |
| Sugar | 2.40 |
| Mono-sodium glutamate | 2,00 |
| Carrageenan¹ | 0.90 |
| Yeast Extract Powder (<1%salt) | 1.83 |
| Chicken extract powder | 1.65 |
| Inosinate/Guanylate IG | 0.20 |
| Turmeric powder | 0.03 |
| Pepper white ground | 0.01 |

| | |
|---|---|
| ¹ Grindsted CX302 (ex DuPont) | |

A cut gel composed of irregularly shaped gel pieces was prepared in the same way as described in Example 8.

Next, a savoury composite food product containing gel pieces, oil and garnish was prepared on the basis of the recipe shown in Table 15.

**Table 15**

| | **Wt.%** |
|---|---|
| Gel pieces | 91 |
| Sunflower oil | 5 |
| Air dried carrot granules (1-2 mm) | 2 |
| Freeze dried onion cubes (3 mm) | 2 |

The composite food product was prepared by introducing the gel pieces into a Kenwood mixer (Cooking Chef, 6,71 bowl) equipped with stainless steel K-beater. The other components were added and mixed at minimum speed until homogenous.

After a few days, the product was analyzed to determine the respective concentrations of gel pieces, vegetable particles and lipophilic material within the composite product. The results are shown in Table 16.

**Table 16**

| | **Wt.%** |
|---|---|
| Gel pieces | 70 |
| Lipophilic material | 5 |
| Pieces of vegetable material | 25 |

These results demonstrate that the dry vegetable particles are effectively rehydrated as a result of water migration from gel pieces to the vegetable particles.

The composite food product was evaluated by an expert panel. It was found that the product showed very good spoonability and compactness. The particles in the product stuck together even if the product was stirred. The gel particles were slightly softer than the gel particles of Example 8. The product had a coarse puree-like texture. The product had a moist and slightly shiny appearance, giving an appealing fresh impression.

### Example 10

A composite savoury food product containing gel pieces, vegetable pieces and oil was prepared as described below.

An aqueous gelling composition was prepared on the basis of the recipe that is shown in Table 17.

**Table 17**

| | **Wt.%** |
|---|---|
| Tap water | 70.18 |
| Salt | 7.60 |
| Sugar | 7.60 |
| Vinegar spirit (12%) | 6.00 |
| Pork gelatin (250 Bloom) | 5.00 |
| Yeast Extract Powder (<1%salt) | 1.83 |
| Chicken extract powder | 1.65 |
| Sorbic acid | 0.10 |
| Turmeric powder | 0.03 |
| Pepper white ground | 0.01 |

A batch of 1500 g was produced in Thermomix TM31 equipment. The powder ingredients were homogenously mixed into the water at 40°C while stirring at maximum speed 5. Next, the mixture was heated to 70°C and held at 70°C for 3 minutes, followed by filling into a rectangular container (∼1,3 kg) that was subsequently covered with plastic foil and kept overnight at 5°C.

The cooled gel was cut into approx. 5x5x5cm pieces. About 1,3kg of these cubes were transferred into a Lab ADE table cutter (approx. 11I size; equipped with 3 sickle knifes) and were cut in about 12 seconds at speed 1 (20 rpm). The gel pieces were removed from the cutter. About 80 wt.% of the particles had a diameter in the range of 0.2-10 mm. The gel pieces were divided into two portions. One portion was sieved through an 8 mm sieve. The other portion was sieved through a 5 mm sieve. The cut gels so obtained were composed of irregularly shaped gel pieces.

Next, savoury composite food products containing gel pieces, oil and garnish were prepared on the basis of the recipe shown in Table 18.

**Table 18**

| | **Wt.%** | |
|---|---|---|
| | <8 mm | <5 mm |
| Gel pieces | 91 | 86 |
| Sunflower oil | 5 | 10 |
| Air dried carrot granules (1-2 mm) | 2 | |
| Freeze dried onion cubes (3 mm) | 2 | 4 |

The composite food products were prepared by introducing the gel pieces into a Kenwood mixer (Cooking Chef, 6,71 bowl) equipped with stainless steel K-beater. The other components were added and mixed at minimum speed until homogenous.

After a few days, the products were analyzed to determine the respective concentrations of gel pieces, vegetable particles and lipophilic material within the composite products. The results are shown in Table 19.

**Table 19**

| | **Wt.%** | |
|---|---|---|
| | <8 mm | <5 mm |
| Gel pieces | 70 | 65 |
| Lipophilic material | 5 | 10 |
| Pieces of vegetable material | 25 | 25 |

These results demonstrate that the dry vegetable particles are effectively rehydrated as a result of water migration from gel pieces to the vegetable particles.

The composite food products were evaluated by an expert panel. It was found that both products showed very good spoonability and compactness. The particles in the products stuck together and the products had a moist and slightly shiny appearance, giving an appealing fresh impression. The particles in the product containing the <5 mm gel pieces could easily be separated by simple stirring.

## Claims

1. A savoury composite food product comprising at least 35 wt.% of gel pieces having a mesh size in the range of 0.2-10 mm; 0.2-55 wt.% of tissue-based food particles having a mesh size in the range of 0.2-10 mm; at least 2 wt.% of lipophilic material covering said gel pieces and said tissue-based food particles; said savoury composite food product having the following composition:
• 20-75 wt.% water;
• 2-30 wt.% of oil;
• 0.1-40 wt.% of taste contributing components selected from glutamic acid, 5'-ribonucleotides, sucrose, glucose, fructose, lactose, lactic acid, citric acid, acetic acid and combinations thereof;
• 0.5-20% by weight of water of gelling agent;
• 35-1100 mmol per 100 g of food product of alkalimetal cation selected from Na⁺, K⁺ and combinations thereof.

2. Food product according to claim 1, wherein the combination of the gel pieces, the tissue-based food particles and the lipophilic material constitutes at least 70 wt.% of the composite food product.

3. Food product according to claim 1 or 2, wherein the tissue-based food particles contain at least 70% by weight of dry matter of tissue material from plants or animals.

4. Food product according to any one of the preceding claims, wherein the product contains at least 1 wt.%, preferably at least 3 wt.% of pieces of plant material having a mesh size in the range of 0.2-10 mm, said plant material being selected from vegetables, herbs, spices, fruit and combinations thereof.

5. Food product according to any one of the preceding claims, wherein the food product comprises at least 45 wt.%, preferably 50-95 wt.% of the gel pieces having a mesh size in the range of 0.2-10 mm

6. Food product according to any one of the preceding claims, wherein the food product has a water activity of 0.5-0.9, more preferably from 0.55-0.85, most preferably between 0.60 and 0.80.

7. Food product according to any one of the preceding claims, wherein the oil content of food product is in the range of 3-25 wt.%, preferably in the range of 4-22 wt.%, more preferably in the range of 4.5-20 wt.%.

8. Food product according to any one of the preceding claims, wherein the lipophilic material contains at least 50 wt.% of glycerides selected from triglycerides, diglycerides and combinations thereof.

9. Food product according to any one of the preceding claims, wherein the composite food product contains alkalimetal cation in a concentration of at least 50 mmol per 100 g of water.

10. Food product according to any one of the preceding claims, wherein the lipophilic material is liquid at 20°C.

11. Food product according to any one of the preceding claims, wherein the gelling agent is selected from the group of agar, carrageenans, pectins, xanthan gum, galactomanans, glucomanans, gelatins, legume starch and combinations thereof.

12. Food product according to claim 11, wherein the gelling agent is selected from agar, locust bean gum, xanthan gum, pectin, gelatin, carrageenan and combinations thereof.

13. Food product according to any one of the preceding claims, wherein the food product contains 0.3-30 wt.%, preferably of 0.5-20 wt.% of the taste contributing components.

14. Food product according to any one of the preceding claims, wherein the food product contains at least 0.1 wt.%, preferably at least 0.3 wt.% of taste enhancing components selected from glutamate, 5'-ribonucleotides and combinations thereof.

15. A process of preparing a composite food product according to any one of the preceding claims, said process comprising mixing gel pieces with tissue-based food particles and lipophilic material.

## Patentansprüche

1. Schmackhaftes zusammengesetztes Lebensmittelprodukt, umfassend mindestens 35 Gew.-% Gelstücke einer Maschenweite in dem Bereich von 0,2-10 mm; 0,2-55 Gew.-% Lebensmittelpartikel auf Gewebebasis einer Maschenweite in dem Bereich von 0,2-10 mm; mindestens 2 Gew.-% lipophiles Material, das die Gelstücke und die Lebensmittelpartikel auf Gewebebasis umhüllt, wobei das schmackhafte zusammengesetzte Lebensmittelprodukt die folgende Zusammensetzung aufweist:
• 20-75 Gew.-% Wasser;
• 2-30 Gew.-% Öl;
• 0,1-40 Gew.-% geschmacksgebende Bestandteile, ausgewählt aus Glutaminsäure, 5'-Ribonucleotiden, Sucrose, Glucose, Fructose, Lactose, Milchsäure, Citronensäure, Essigsäure und Kombinationen davon;
• 0,5-20% Geliermittel, bezogen auf das Gewicht vom Wasser;
• 35-1100 mmol Alkalimetallkation, ausgewählt unter Na⁺, K⁺ und Kombinationen davon, pro 100 g des Lebensmittelprodukts.

2. Lebensmittelprodukt nach Anspruch 1, wobei die Kombination der Gelstücke, der Lebensmittelpartikel auf Gewebebasis und des lipophilen Materials mindestens 70 Gew.-% des zusammengesetzten Lebensmittelprodukts ausmacht.

3. Lebensmittelprodukt nach Anspruch 1 oder 2, wobei die Lebensmittelpartikel auf Gewebebasis mindestens 70 Gew.-% Trockensubstanz von Gewebematerial von Pflanzen oder Tieren enthalten.

4. Lebensmittelprodukt nach irgendeinem der vorhergehenden Ansprüche, wobei das Produkt mindestens 1 Gew.-%, vorzugsweise mindestens 3 Gew.-% Stücke von Pflanzenmaterial einer Maschenweite in dem Bereich von 0,2-10 mm enthalten, wobei das Pflanzenmaterial unter Gemüse, Kräutern, Gewürzen, Frucht und Kombinationen davon ausgewählt ist.

5. Lebensmittelprodukt nach irgendeinem der vorhergehenden Ansprüche, wobei das Lebensmittelprodukt mindestens 45 Gew.-%, vorzugsweise 50-95 Gew.-% der Gelstücke einer Maschenweite in dem Bereich von 0,2-10 mm umfasst.

6. Lebensmittelprodukt nach irgendeinem der vorhergehenden Ansprüche, wobei das Lebensmittelprodukt eine Wasseraktivität von 0,5-0,9, bevorzugter von 0,55-0,85, höchst bevorzugt zwischen 0,60 und 0,80, aufweist.

7. Lebensmittelprodukt nach irgendeinem der vorhergehenden Ansprüche, wobei der Ölgehalt des Lebensmittelprodukts in dem Bereich von 3-25 Gew.-%, vorzugsweise in dem Bereich von 4-22 Gew.-%, bevorzugter in dem Bereich von 4,5-20 Gew.-%, liegt.

8. Lebensmittelprodukt nach irgendeinem der vorhergehenden Ansprüche, wobei das lipophile Material mindestens 50 Gew.-% Glyceride, ausgewählt aus Triglyceriden, Diglyceriden und Kombinationen davon, enthält.

9. Lebensmittelprodukt nach irgendeinem der vorhergehenden Ansprüche, wobei das zusammengesetzte Lebensmittelprodukt Alkalimetallkationen in einer Konzentration von mindestens 50 mmol pro 100 g Wasser enthält.

10. Lebensmittelprodukt nach irgendeinem der vorhergehenden Ansprüche, wobei das lipophile Material bei 20°C flüssig ist.

11. Lebensmittelprodukt nach irgendeinem der vorhergehenden Ansprüche, wobei das Geliermittel aus der Gruppe von Agar, Carrageenen, Pektinen, Xanthangummi, Galactomannanen, Glucomannanen, Gelatinen, Hülsenfruchtstärke und Kombinationen davon ausgewählt ist.

12. Lebensmittelprodukt nach Anspruch 11, wobei das Geliermittel aus Agar, Johannisbrotgummi, Xanthangummi, Pektin, Gelatine, Carrageen und Kombinationen davon ausgewählt ist.

13. Lebensmittelprodukt nach irgendeinem der vorhergehenden Ansprüche, wobei das Lebensmittelprodukt 0,3-30 Gew.-%, vorzugsweise 0,5-20 Gew.-% der geschmacksgebenden Bestandteile enthält.

14. Lebensmittelprodukt nach irgendeinem der vorhergehenden Ansprüche, wobei das Lebensmittelprodukt mindestens 0,1 Gew.-%, vorzugsweise mindestens 0,3 Gew.-% geschmacksgebende Bestandteile, ausgewählt aus Glutamat, 5'-Ribonucleotiden und Kombinationen davon, enthält.

15. Verfahren zur Herstellung eines zusammengesetzten Lebensmittelprodukts nach irgendeinem der vorhergehenden Ansprüche, wobei das Verfahren das Mischen der Gelstücke mit Lebensmittelpartikeln auf Gewebebasis und lipophilem Material umfasst.

## Revendications

1. Produit alimentaire composite savoureux comprenant au moins 35 % en masse de pièces de gel présentant une dimension de maillage dans l'intervalle de 0,2-10 mm ; 0,2-55 % en masse de particules alimentaires à base de tissu présentant une dimension de maillage dans l'intervalle de 0,2-10 mm ; au moins 2 % en masse de matériau lipophile recouvrant lesdites pièces de gel et lesdites particules alimentaires à base de tissu ;
ledit produit alimentaire composite savoureux présentant la composition suivante :
• 20-75 % en masse d'eau ;
• 2-30 % en masse d'huile ;
• 0,1-40 % en masse de constituants contribuant au goût choisis parmi l'acide glutamique, les 5'-ribonucléotides, le saccharose, glucose, fructose, lactose, acide lactique, acide citrique, acide acétique et combinaisons de ceux-ci ;
• 0,5-20 % en masse d'eau d'agent gélifiant ;
• 35-1 100 mmol par 100 g de produit alimentaire de cation de métal alcalin choisi parmi Na⁺, K⁺ et des combinaisons de ceux-ci.

2. Produit alimentaire selon la revendication 1, dans lequel la combinaison des pièces de gel, des particules alimentaires à base de tissu et du matériau lipophile constitue au moins 70 % en masse du produit alimentaire composite.

3. Produit alimentaire selon la revendication 1 ou 2, dans lequel les particules alimentaires à base de tissu contiennent au moins 70 % en masse de matière sèche de matériau de tissu provenant de plantes ou d'animaux.

4. Produit alimentaire selon l'une quelconque des revendications précédentes, dans lequel le produit contient au moins 1 % en masse, de préférence au moins 3 % en masse de pièces de matériau de plante présentant une dimension de maillage dans l'intervalle de 0,2-10 mm, ledit matériau de plante étant choisi parmi des légumes, herbes, épices, fruits et combinaisons de ceux-ci.

5. Produit alimentaire selon l'une quelconque des revendications précédentes, dans lequel le produit alimentaire comprend au moins 45 % en masse, de préférence 50-95 % en masse des pièces de gel présentant une dimension de maillage dans l'intervalle de 0,2-10 mm.

6. Produit alimentaire selon l'une quelconque des revendications précédentes, dans lequel le produit alimentaire présente une activité d'eau de 0,5-0,9, encore mieux de 0,55-0,85, bien mieux encore de 0,60 à 0,80.

7. Produit alimentaire selon l'une quelconque des revendications précédentes, dans lequel la teneur en huile du produit alimentaire se trouve dans l'intervalle de 3-25 % en masse, de préférence dans l'intervalle de 4-22 % en masse, encore mieux dans l'intervalle de 4,5-20 % en masse.

8. Produit alimentaire selon l'une quelconque des revendications précédentes, dans lequel le matériau lipophile contient au moins 50 % en masse de glycérides choisis parmi des triglycérides, diglycérides et combinaisons de ceux-ci.

9. Produit alimentaire selon l'une quelconque des revendications précédentes, dans lequel le produit alimentaire composite contient un cation de métal alcalin dans une concentration d'au moins 50 mmol par 100 g d'eau.

10. Produit alimentaire selon l'une quelconque des revendications précédentes, dans lequel le matériau lipophile est liquide à 20°C.

11. Produit alimentaire selon l'une quelconque des revendications précédentes, dans lequel l'agent gélifiant est choisi dans le groupe d'agar, carraghénanes, pectines, gomme xanthane, galactomananes, glucomananes, gélatines, amidon de légume et combinaisons de ceux-ci.

12. Produit alimentaire selon la revendication 11, dans lequel l'agent gélifiant est choisi parmi l'agar, la gomme de caroube, la gomme xanthane, la pectine, la gélatine, le carraghénane et des combinaisons de ceux-ci.

13. Produit alimentaire selon l'une quelconque des revendications précédentes, dans lequel le produit alimentaire contient 0,3-30 % en masse, de préférence 0,5-20 % en masse des constituants contribuant au goût.

14. Produit alimentaire selon l'une quelconque des revendications précédentes, dans lequel le produit alimentaire contient au moins 0,1 % en masse, de préférence au moins 0,3 % en masse de constituants de promotion du goût choisis parmi le glutamate, les 5'-ribonucléotides et combinaisons de ceux-ci.

15. Procédé de préparation d'un produit alimentaire composite selon l'une quelconque des revendications précédentes, ledit procédé comprenant le mélange de pièces de gel avec des particules alimentaires à base de tissu et un matériau lipophile.
